# EUROPEAN PATENT APPLICATION

(11) **EP 2 916 449 A1**
(43) Date of publication of application: **09.09.2015**
(21) Application number: 13850697.7
(22) Date of filing: 29.10.2013
(51) Int. Cl.: H02N 1/06, H02M 7/08

(54) **VIBRATORY GENERATOR DEVICE AND POWER SOURCE MODULE**

(30) Priority: 05.11.2012 JP 2012243770
(71) Applicant: Asahi Glass Company, Limited, Tokyo 100-8405 (JP)
(72) Inventor: HATTORI, Yutaka, Kamakura-shi Kanagawa 248-0024 (JP); HAMATANI, Yoshiki, Tokyo 100-8405 (JP)
(74) Representative: Müller-Boré & Partner Patentanwälte PartG mbB
(86) International application number: PCT/JP2013/079318
(87) International publication number: WO 2014/069483

(57) **Abstract**

Provided are a vibration power generator and a power source module.

The vibration power generator (100) includes a plurality of electrostatic induction generation devices (100₁ to 100ₙ); and a power combiner, the power combiner combining a generated output from each of the electrostatic induction generation devices. Each of the electrostatic induction generation devices includes a fixed electrode; a movable electrode disposed opposite to the fixed electrode so as to be movable relatively with respect to the fixed electrode; and an electret disposed on a side of the movable electrode opposite to the fixed electrode or a side of the fixed electrode opposite to the movable electrode.

## Description

### TECHNICAL FIELD

The present invention relates to a vibration power generator including an electrostatic induction generation device and a power source module including the vibration power generator.

### BACKGROUND ART

Heretofore, as the energy conversion device for converting vibration-driven kinematic energy into electric energy, there has been an electrostatic induction conversion device including an electret disclosed in Patent Document 1. The electrostatic induction conversion device includes a first conductor and a second conductor disposed opposite to each other, and an electret disposed on the first conductor. The second conductor is supported so as to be relatively movable with respect to the first conductor by means of an elastic member, such as a spring, and has a specific mechanical resonance frequency derived from the spring constant, etc.

In accordance with the above-mentioned electrostatic induction conversion device, when the second conductor is relatively moved with respect to the first conductor by vibration, the electric charges injected into the electret induce electric charges in the second conductor to generate power. Thus, the use of the above-mentioned electrostatic induction conversion device can provide a vibration power generator which is capable to generating power based on vibration produced in the environment. In accordance with such a vibration power generator, the kinematic energy of the second conductor included in the electrostatic induction conversion device is made greater to increase power generation at frequencies close to the specific mechanical resonance frequency of the second conductor disposed on the electrostatic induction conversion device.

### PRIOR ART DOCUMENT(S)

### PATENT DOCUMENT(S)

Patent Document 1: JP-A-2006-180450

### DISCLOSURE OF INVENTION

### TECHNICAL PROBLEM

In accordance with the above-mentioned vibration power generator, when the vibration frequency of the second conductor included in the electrostatic induction conversion device is brought closer to the specific mechanical resonance frequency of the second conductor, the kinematic energy of the second conductor, however, lowers such that a sufficient amount of power generation is not necessarily produced.

From this point of view, it is an object of the present invention to provide a vibration power generator and a power source module which are capable of converting kinematic energy into electric energy to generate power in a wide range of vibration frequencies.

### SOLUTION TO PROBLEM

The present invention provides a vibration power generator and a power source module as defined in the following items (1) to (13).
(1) A vibration power generator including:
   a plurality of electrostatic induction generation devices; and
   a power combiner, the power combiner combining a generated output from each of the electrostatic induction generation devices.
(2) The vibration power generator defined in item 1, wherein the electrostatic induction generation devices are constituted by a plurality of electrostatic induction generation devices having different resonance frequencies from one another.
(3) The vibration power generator defined in item 1, wherein the electrostatic induction generation devices are constituted by a plurality of electrostatic induction generation devices having the same resonance frequency as one another.
(4) The vibration power generator defined in item 1, wherein the electrostatic induction generation devices are constituted by at least three electrostatic induction generation devices configured such that there is a combination of electrostatic induction generation devices having a common resonance frequency while there is another combination of electrostatic induction generation devices having different resonance frequencies.
(5) The vibration power generator defined in any one of items 1 to 4, wherein each of the electrostatic induction generation devices includes:
   a fixed electrode;
   a movable electrode disposed opposite to the fixed electrode so as to be movable relatively with respect to the fixed electrode; and
   an electret disposed on a side of the movable electrode opposite to the fixed electrode or a side of the fixed electrode opposite to the movable electrode.
(6) The vibration power generator defined in any one of items 1 to 5, wherein the power combiner includes a plurality of rectifier circuits, the rectifier circuits rectifying the generated power from each of the electrostatic induction generation devices, and the rectifier circuits having outputs connected to each other in parallel.
(7) The vibration power generator defined in item 6, wherein each of the rectifier circuits includes a schottky-barrier diode such that output current from the rectifier circuit is suppressed from flowing reversely.
(8) The vibration power generator defined in item 6 or 7, wherein each of the rectifier circuits is a full-wave rectifier circuit.
(9) The vibration power generator defined in any one of items 5 to 8, wherein the electret has a resin film made of a fluorinated polymer, the resin film having electric charges injected thereinto.
(10) The vibration power generator defined in item 9, wherein the fluorinated polymer is a fluorinated polymer containing an alicyclic ring in the main chain (a) or a derivative thereof (a').
(11) The vibration power generator defined in item 10, wherein the fluorinated polymer (a) further contains a reactive functional group.
(12) The vibration power generator defined in item 10, wherein the derivative (a') of the fluorinated polymer (a) further includes a mixture of the fluorinated polymer (a) containing a reactive functional group, and a silane coupling agent containing an amino group, or includes a reaction product therebetween.
(13) A power source module including:
   a vibration power generator defined in any one of items (1) to (12);
   a smoothing unit, the smoothing unit smoothing the generated output from the vibration power generator; and
   a voltage converter, the voltage converter converting the generated output smoothed by the smoothing unit, into a desired voltage.

### ADVANTAGEOUS EFFECT(S) OF INVENTION

In accordance with the vibration power generator and the power source module of the present invention, it is possible to convert kinematic energy into electric energy to generate power in a wide range of vibration frequencies.

### BRIEF DESCRIPTION OF DRAWING(S)

Fig. 1 is a circuit diagram showing an example of the structure of the vibration power generator according to a first embodiment of the present invention.
Fig. 2 is a perspective view showing an example of an electrostatic induction conversion device included in the vibration power generator according to the first embodiment of the present invention.
Figs. 3(a) and (b) are waveform charts showing examples of the frequency characteristics of the power generated by the electrostatic induction conversion device included in the vibration power generator according to the first embodiment of the present invention.
Figs. 4(a) and (b) are waveform charts showing examples of the generated output (voltage) from the electrostatic induction conversion device included in the vibration power generator according to the first embodiment of the present invention.
Fig. 5 is a waveform chart showing an example of the reverse current characteristics of a schottky-barrier diode included in the vibration power generator according to the first embodiment of the present invention.
Fig. 6 is a waveform chart showing an example of the frequency characteristics of the power generated by the vibration power generator according to the first embodiment of the present invention.
Fig. 7 is a circuit diagram showing a modified example of the vibration power generator according to the first embodiment of the present invention.
Fig. 8 is a circuit diagram showing an example of the structure of the power source module according to a second embodiment of the present invention.

### DESCRIPTION OF EMBODIMENT(S)

### [First embodiment]

### (Explanation of structure)

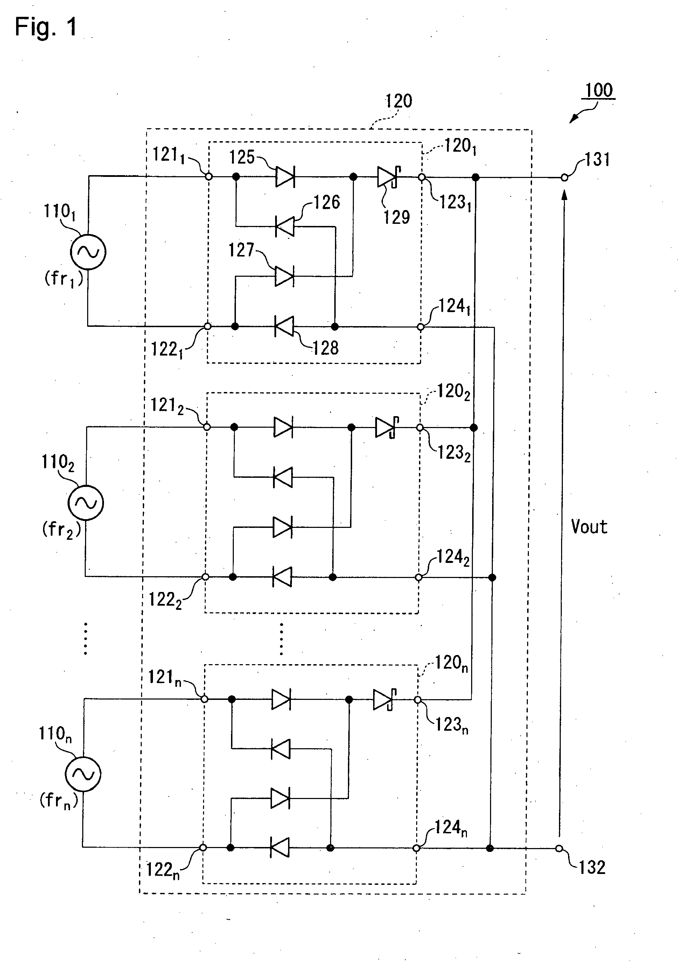

In Fig. 1 is shown an example of the structure of the vibration power generator 100 according to a first embodiment of the present invention.

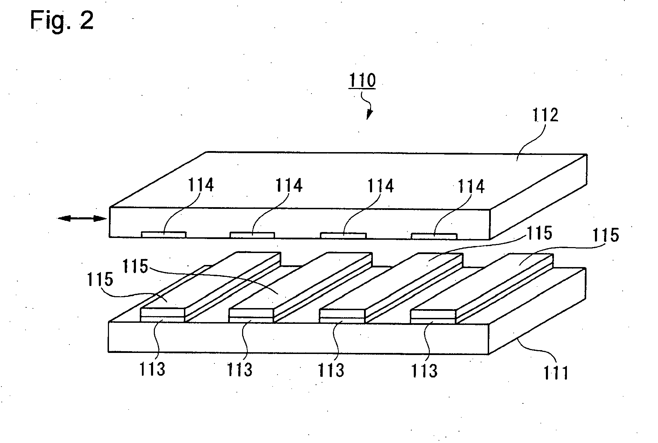

The vibration power generator 100 includes a plurality of electrostatic induction generation devices 110₁, 110₂, ... 110ₙ (n is a natural number not less than 2); and a power combiner 120 for combining the generated output from each of the electrostatic induction generation devices. The electrostatic induction conversion devices 110₁, 110₂, ... 110ₙ have different mechanical resonance frequencies fr₁, fr₂, ... frₙ from each other such that the kinematic energy of a movable member constituted by a movable substrate 112 and movable electrodes 114 described later and shown in Fig. 2 is converted into electric energy by utilizing electrostatic induction.

It should be noted that the wording "electrostatic induction conversion device 110" means one of the electrostatic induction conversion devices 110₁, 110₂, ... 110ₙ in the following explanation. In Description, the wording "generated output" means any one of voltage, current and electric power.

In Fig. 2 is shown an example of the structure of an electrostatic induction conversion device 110. The electrostatic induction conversion device 110 includes a fixed substrate 111, a movable substrate 112, fixed electrodes 113, movable electrodes 114 and electrets 115. The fixed substrate 111 and the movable substrate 112 are disposed to be opposite to each other, and the movable substrate 112 is supported so as to be relatively movable with respect to the fixed substrate 111 by an elastic member (such as a spring). In this embodiment, the movable substrate 112 is supported so as to be reciprocatably movable unidirectionally (the directions indicated by the arrows in this figure), being apart, by a constant gap, from the fixed substrate 111. It should be noted that the movable substrate 112 may move in any directions relatively with respect to the fixed substrate 111 so long as electrostatic induction is caused.

The fixed substrate 111 has the plural fixed electrodes 113 formed in a strip shape and disposed at a plurality of positions with a constant pitch in a side opposite to the movable substrate 112. Each of the plural fixed electrodes 113 has a longitudinal direction set in a direction perpendicular to the reciprocating direction of the movable substrate 112. The movable substrate 112 has the plural movable electrodes 114 formed in a strip shape and disposed at positions in a side opposite to the fixed substrate 111 so as to correspond to the respective fixed electrodes. Since the movable substrate 112 with the movable electrodes 114 disposed therein is configured so as to be reciprocatably movable in the directions, being apart, by a constant gap, from the fixed substrate 111 with the fixed electrodes 113 disposed thereon, the movable electrodes 114 are disposed opposite to the fixed electrodes 113 so as to be movable relatively with respect to the fixed electrodes. The respective electrets 115 are disposed on sides of the respective fixed electrodes 113 opposite to the respective movable electrodes 114.

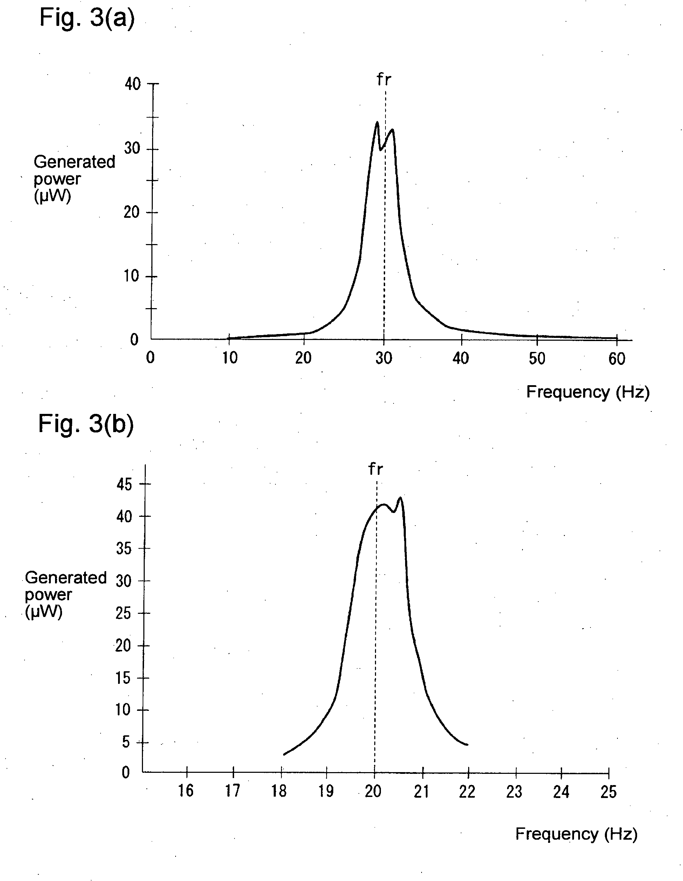

A movable member constituted by the movable substrate 112 and the movable electrodes 114 (not indicated by reference numeral) has a specific mechanical resonance frequency fr. The mechanical resonance frequency fr may be set by adjusting the mass of the movable member, the elastic modulus of the elastic member (such as a spring) supporting the movable member or the like. The mechanical resonance frequencies fr₁, fr₂ and frₙ of the electrostatic induction conversion devices 110₁, 110₂, ... 110ₙ shown in Fig. 1 may be set at different values from one another by adjusting, for example, the mass of the movable substrate 112 shown in Fig. 2 or the elastic modulus or the like of the elastic member (not shown) for supporting the movable substrate 112 in consideration of the mechanical resonance frequencies fr of the movable member. As one example, when the spring, which supports the movable substrate of an electrostatic induction conversion device having frequency characteristics (mechanical resonance frequency of 30Hz) shown in Fig. 3(a) and described later, has a length or diameter increased by about 30%, the electrostatic induction conversion device is provided with a mechanical resonance frequency of 20Hz shown in Fig. 3(b). Further, the Q value of resonance at respective mechanical resonance frequencies may be adjusted by disposing a damper for damping the expansion and contraction movement of the spring and controlling the damping coefficient of the damper for example.

The mechanical resonance frequencies fr₁, fr₂, ... frₙ of the electrostatic induction conversion devices 110₁, 110₂, ... 110ₙ may be set at the frequency of e.g. arbitrary vibration existing in the environment. Examples of the vibration existing in the environment include the vibration of a skyscraper in a frequency band of from about 1 to about 10 Hz, the vibration caused by a coming and going pedestrians in a frequency band of from about 2 to about 4 Hz, the vibration of an air conditioner outdoor unit (compressor) in a frequency band of from about 4 to about 20 Hz, the vibration of a duct piping blower in a frequency band of from about 20 to about 110 Hz, and the vibration of an automobile in a frequency band of from about 30 to about 110 Hz.

It should be noted that the number of the fixed electrodes 113 and the number of the movable electrodes 114 are not necessarily plural and may be singular. The electrets 115 may be disposed on the movable electrodes 114 opposite to the fixed electrodes 113, instead of being disposed on the fixed electrodes 113 as shown in Fig. 2.

Each of the electrets 115 is a film-like charge retention medium which has homo-charges (isolated charges) held therein by injecting positive or negative electric charges thereinto. The generated output from an electrostatic induction generation device 110 increases as the surface charge density of the electrets 115 increases. In this embodiment, the charge retention medium forming each of the electrets is made of a resin film (A) described later. This arrangement allows the surface charge density of the electrets 115 to increase, making it possible to obtain a high voltage of from e.g. about 120 to about 200 V as the generated output of the electrostatic induction generation device 110.

Because an insulating material is typically employed to fabricate the charge retention medium forming an electret, the electrostatic induction conversion devices have a significantly high output impedance which is as high as e.g. about 10 MΩ. For this reason, an electrostatic induction conversion device 110 produces a minute output current. From this point of view, the electrostatic induction conversion devices are normally not suited to the application of power generation. On the other hand, the electrostatic induction conversion devices according to this embodiment can be utilized for power generation since a high voltage is generated by employing the resin film (A) made of the fluorinated polymer described later as the charge retention medium forming the electrets 115.

In Figs. 3(a) and (b) are shown examples of the frequency characteristics of the generated output (generated power) from an electrostatic induction conversion device 110. In Fig. 3(a) is shown an example of the frequency characteristics of the generated power in a case where the mechanical resonance frequency fr is set at 30 Hz while in Fig. 3(b) is shown an example of the frequency characteristics of the generated power in a case where the mechanical resonance frequency fr is set at 20 Hz. In both cases, it is possible to obtain a large generated output (generated power) in the vicinity of the mechanical resonance frequency fr because a large kinematic energy is imposed on the movable substrate 112 of an electrostatic induction conversion device 110 with the movable electrodes 114 disposed therein.

Explanation will be returned to Fig. 1. The power combiner 120 includes a plurality of rectifier circuits 120₁, 120₂, ... 120ₙ which rectify the outputs generated by the plurality of electrostatic induction generation devices 110₁, 110₂, ... 110ₙ. The plurality of rectifier circuits 120₁, 120₂, ... 120ₙ has outputs connected to one another in parallel. Specifically, the rectifier circuits 120₁, 120₂, ... 120ₙ have first outputs 123₁, 123₂, ... 123ₙ commonly connected to a first output terminal 131 while the rectifier circuit 120₁, 120₂, ... 120ₙ have second outputs 124₁, 124₂, ... 124ₙ commonly connected to a second output terminal 132.

The structures of the rectifier circuits 120₁, 120₂, ... 120ₙ will be described in detail.

In this embodiment, each of the rectifier circuits 120₁, 120₂, ... 120ₙ is a full-wave rectifier circuit. The rectifier circuit 120₁ includes a first input 121₁, a second input 122₁, diodes 125, 126, 127 and 128, a schottky-barrier diode 129, the first output 123₁ and the second output 124₁. In this embodiment, the first input 121₁ is electrically connected to the movable electrodes 114 of the electrostatic induction conversion device 110₁ while the second input 122₁ is electrically connected to the fixed electrodes 113 of the electrostatic induction conversion device 110₁. Conversely, the first input 121₁ may be electrically connected to the fixed electrodes 113 of the electrostatic induction conversion device 110₁ while the second input 122₁ is electrically connected to the movable electrode 114 of the electrostatic induction conversion device 110₁.

The first input 121₁ is connected to the anode of the diode 125, and the cathode of the diode 125 is connected to the anode of the schottky-barrier diode 129. The cathode of the schottky-barrier diode 129 is connected to the first output 123₁. The second input 122₁ is connected to the cathode of the diode 128, and the anode of the diode 128 is connected to the second output 124₁. The anode of the diode 125 is connected to the cathode of the diode 126, and the anode of the diode 126 is connected to the anode of the diode 128. The cathode of the diode 128 is connected to the anode of the diode 127, and the cathode of the diode 127 is connected to the cathode of the diode 125.

The other rectifier circuits 120₂, ... 120ₙ are also configured in the same manner as the rectifier circuit 120₁.

Each of the rectifier circuits 120₁, 120₂, ... 120ₙ is not limited to be a full-wave rectifier circuit and may be constituted by another type of rectifier circuit.

In the structure of the rectifier circuit 120₁ shown in Fig. 1, another schottky diode may be added between the anode of the diode 128 and the second output 124₁ so as to correspond to the schottky-barrier diode 129. In this case, the anode of the added schottky-barrier diode is connected to the second output 124₁ while the cathode of the added schottky-barrier diode is connected to the anode of the diode 128, for example. This is also applicable to the other rectifier circuits 120₂, ... 120ₙ.

### (Explanation of operation)

In the vibration power generator 100 according to this embodiment, kinetic energy caused by vibration existing in the environment is converted into electric energy to generate power. In general, it is said that the frequencies of the vibration in the environment are mostly low frequencies of at most 100 Hz. Now, for ease in understanding of explanation, explanation will be made about a case where vibration caused by an air conditioner compressor is assumed as one example of the vibration in the environment and the vibration power generator 100 is mounted on a casing with the conditioner compressor housed therein.

It should be noted that the present invention is applicable to not only the vibration of an air conditioner compressor but also to a vibration power generator, by which kinematic energy caused by vibration existing in the environment is converted into electric energy.

An air conditioner normally controls the rotation number of its compressor in the course of setting a room temperature at a desired temperature. Thus, the vibration frequency of the air conditioner casing with the compressor housed therein varies, depending on the rotation number of the compressor. When the vibration frequency of the air conditioner casing is close to the mechanical resonance frequency fr₁ of the electrostatic induction conversion device 110₁ shown in Fig. 1, the electrostatic induction conversion device 110₁ having the mechanical resonance frequency fr₁ close to the vibration frequency of the air conditioner casing is brought into a resonance state among the electrostatic conversion devices 110₁, 110₂ ... 110ₙ. This significantly vibrates the movable electrodes 114 (Fig. 2) of the electrostatic conversion device 110₁ to increase the generated output from the electrostatic induction conversion device 110₁.

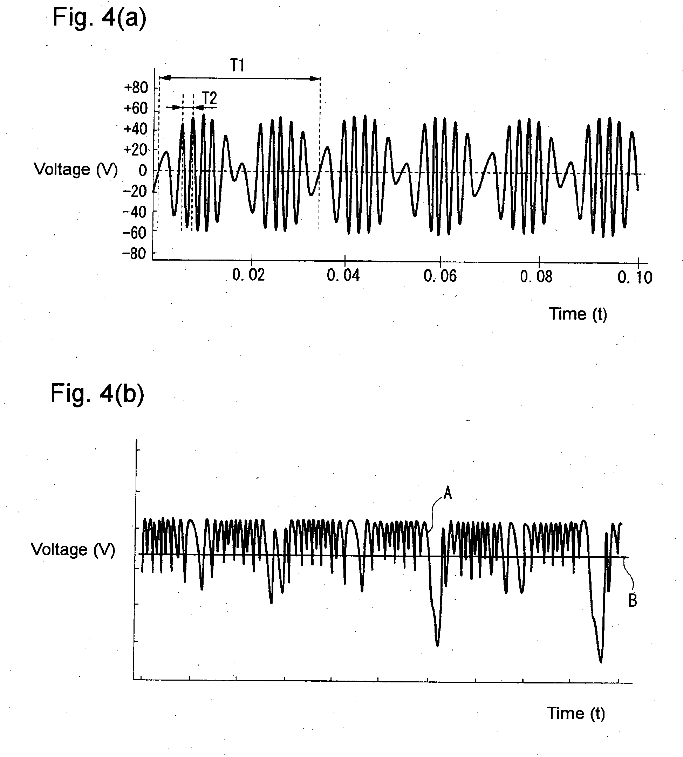

In Fig. 4(a) is shown an example of the voltage waveform of the generated output from the electrostatic induction conversion device 110₁ in a resonance state. The generated output from the electrostatic induction conversion device 110₁ is ac power having a voltage which changes in a cycle corresponding to the reciprocating movement of the movable substrate 112 shown in Fig. 2 and which changes in a cycle corresponding to the arrangement pit of the fixed electrodes 113 and those of the movable electrodes 114. For these reasons, as shown in Fig. 4(a), the waveform of the output voltage from the electrostatic conversion device 110₁ contains a component relevant to a cycle T1 corresponding to the reciprocating movement of the movable substrate 112 (or the movable electrodes 114) and a component of relevant to a cycle T2 corresponding to the arrangement pit of the fixed electrodes 113 and those of the movable electrodes 114.

In this embodiment, the resin film (A) described later is employed as the charge retention medium forming each of the electrets 115 such that the electrostatic induction conversion device 110₁ in a resonance state generates a high voltage of about 120 to about 200V as the peak value. The generated output from each of the other electrostatic induction conversion devices 110₂, ... 110ₙ decreases as the difference between the mechanical resonance frequency of each of the other electrostatic induction conversion devices and the vibration frequency of the air conditioner casing increases. The respective generated outputs from the electrostatic induction conversion devices 110₁, 110₂, ... 110ₙ are supplied to the power combiner 120.

The power combiner 120 combines the generated outputs supplied from the respective electrostatic induction conversion devices 110₁, 110₂, ... 110ₙ and generates a dc output voltage Vout between the first output terminal 131 and the second output terminal 132. In this embodiment, the rectifier circuits 120₁, 120₂, ... 120ₙ constituting the power combiner 120 rectify the ac generated outputs supplied from the respective the electrostatic induction conversion devices 110₁, 110₂, ... 110ₙ to produce a dc generated output. The dc generated outputs rectified by the respective rectifier circuits are combined as the generated output providing the output voltage Vout from the vibration power generator 100.

In Fig. 4(b) is shown an example of the voltage waveform of the generated output rectified by the rectifier circuit 120₁. The waveform A shown in Fig. 4(b) is a dc voltage waveform (pulsating current) obtained by subjecting the waveform shown in Fig. 4(a) to full-wave rectification. In other words, the waveform A is obtained by inverting the polarity of negative parts of the waveform shown in Fig. 4(a). The waveform B shown in Fig. 4(b) is obtained by averaging the generated output (voltage) from the rectifier circuit 120₁. It should be noted that it is optional whether the generated outputs are averaged in the rectifier circuits or not. This is also applicable to the waveform of the generated output rectified by each of the other rectifier circuits 120₂, ... 120ₙ.

Now, the rectifying operation made by each of the rectifier circuits 120₁, 120₂, ... 120ₙ will be described. For example, in a case where the movable electrodes 114 of the electrostatic induction conversion device 110₁, which are connected to the first input 121₁ of the rectifier circuit 120₁, are at a positive potential while the fixed electrodes 113 connected to the second input 122₁ are at a negative potential, the diodes 125 and 128, and the schottky-barrier diode 129 are biased in the forward direction while the diodes 126 and 127 are biased in the reverse direction. As a result, the rectifier circuit 120₁ outputs a dc voltage as the output voltage Vout such that the first output 123₁ is a higher potential, using the potential of the second output 124₁ as a reference.

In contrast, for example, in a case where the movable electrodes 114 of the electrostatic induction conversion device 110₁ connected to the first input 121₁ of the rectifier circuit 120₁ are at a negative potential while the fixed electrodes 113 connected to the second input 122₁ are at a positive potential, the diodes 125 and 128 are biased in the reverse direction while the diodes 126 and 127, the schottky-barrier diode 129 are biased in the forward direction. As a result, the rectifier circuit 120₁ outputs a dc voltage as the output voltage Vout such that the first output 123₁ is at higher potential, using the potential of the second output 124₁ as a reference.

Consequently, the rectifier circuit 120₁ constantly outputs such that the first output 123₁ has a higher potential, using the potential of the second output 124₁ as a reference, irrespectively of the polarity of the generated outputs supplied to the first input 121₁ and the second input 122₁ from the electrostatic induction conversion device 110₁. Thus, the ac generated output from the electrostatic induction conversion device 110₁ is full-wave rectified by the rectifier circuit 120₁ such that a dc generated output is obtained.

This is also applicable to the rectifying operation in the other rectifier circuits 120₂ ... 120ₙ.

Now, the function and advantage of the schottky-barrier diode 129 will be described. In general, a diode has a property that almost no current is allowed to flow in a reverse biased state. Just after the biased state is switched from the forward direction to the reverse direction, a large reverse current is, however, temporarily generated by the recombination or diffusion of minority carriers remaining in the semiconductor layer constituting the diode, and then the reverse current trends to be gradually decreasing. This phenomenon has been known as the recovery property of a diode. When a large reverse current is generated in the diodes 125 to 128 constituting each of the rectifier circuits 120₁, 120₂, ... 120ₙ, the rectified generated outputs are reversely flowed and returned to the electrostatic induction conversion devices 110₁, 110₂, ... 110ₙ. For this reason, when the reverse current of a diode is large, the power generation efficiency lowers.

From this point of view, in this embodiment, in order to reduce a decrease in the power generation efficiency caused by the recovery property of the diodes 125 to 128 constituting the rectifier circuits 120₁, 120₂, ... 120ₙ, each of the rectifier circuits 120₁, 120₂, ... 120ₙ includes the schottky-barrier diode 129 with electrical characteristics having a high reverse breakdown voltage and a minimized reverse current, such that the use of schottky-barrier diode 129 suppresses the reverse flow of the generated power rectified by each of the rectifier circuits. In this embodiment, the resin film (A) described later is employed as the charge retention medium forming each of the electrets 115 to generate power having a high voltage. For this reason, the schottky-barrier diodes 129 for suppressing the reverse flow of the generated power need to have a high reverse breakdown voltage as the reverse breakdown voltage property. In this embodiment, the schottky-barrier diodes 129 may be known schottky-barrier diodes, which have a recovery property and a reverse breakdown voltage property improved by e.g. performing special treatment to the interface between silicon and metal at a high temperature. Such type of schottky-barrier diodes can effectively reduce the reverse current of generated power having a high voltage and reduce a decrease in the power generation efficiency because of having a reverse breakdown voltage property of e.g. at least about 600V. It should be noted that the present invention is not limited to this specific case and that the schottky-barrier diodes 129 may be any devices so long as they can reduce the reverse flow in the generated power.

It is important to reduce a decrease in the generated power efficiency for a case where rectification is made for the generated power from each of the electrostatic induction conversion devices 110₁, 110₂ ...110ₙ having a relatively high output impedance. In other words, an electrostatic induction conversion device cannot necessarily provide an output current in a sufficient amount because of having a high output impedance. For this reason, most part of the generated power, which is supplied from each of the electrostatic induction conversion devices 120₁, 120₂, ...120ₙ to each of the corresponding rectifier circuits 120₁, 120₂, ...120ₙ, flows reversely from each of the rectifier circuits to each of the corresponding electrostatic induction conversion devices to significantly decrease the generated power efficiency as described above. From this point of view, it is important to establish the technique for reducing the reverse flow of the generated power in a rectifier circuit when employing an electrostatic induction conversion device having a relatively high output impedance. Further, when the rectifier circuits 120₁, 120₂, ...120ₙ have their outputs connected to each other as in this embodiment, the current component flowing among the rectifier circuits through the outputs increases to increase the reverse current based on the current component as the number of the rectifier circuits increases. From this point of view, it becomes more important to establish the technique for reducing the reverse flow of the generated power in each rectifier circuit as the number of the rectifier circuits increases.

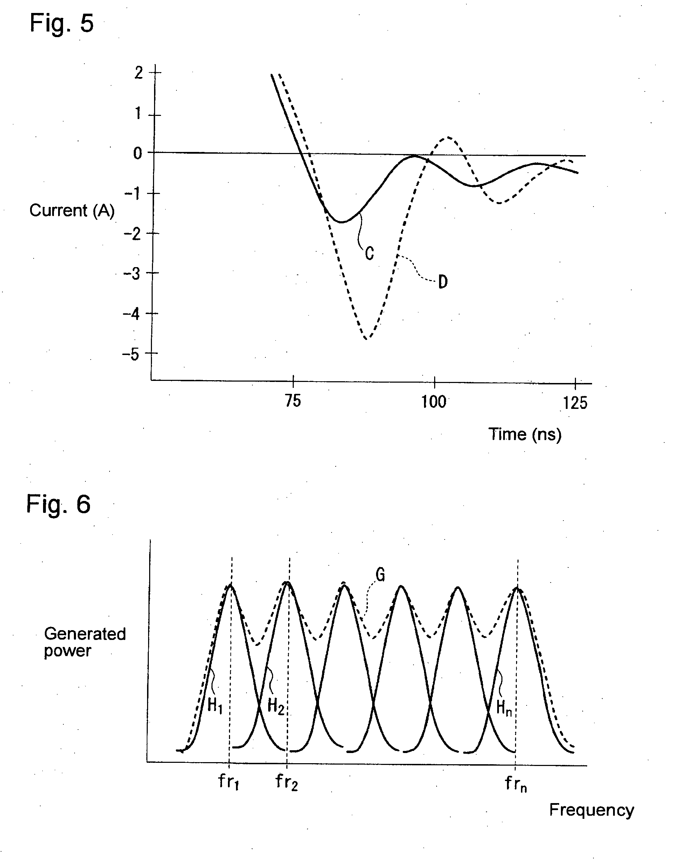

In Fig. 5 are shown an example of the reverse current characteristics of the schottky-barrier diode 129 included in each of the rectifier circuits 120₁, 120₂, ... 120ₙ and an example of the reverse current characteristics of a typical diode having a p-n junction. In these figures, the waveform C indicates the example of the reverse current characteristics of the schottky-barrier diode 129, and the waveform D indicates the example of the reverse current characteristics of the typical diode having a p-n junction.

In the examples shown in Fig. 5, the amount of the reverse current through the schottky-barrier diode 129 indicated by the waveform C is reduced to about 35% of that of the reverse current through the diode having a p-n junction. These examples show that each of the rectifier circuits 120₁, 120₂, ...120ₙ can include the schottky-barrier diode 129 to improve the generated power efficiency by 65% in comparison with a case where rectification is made only by use of the typical diodes 125 to 128 having a p-n junction.

Explanation will be returned to Fig. 1. Since the vibration frequency of the casing with the air conditioner compressor housed therein is now close to the resonance frequency fr₁ of the electrostatic induction conversion device 110₁, the generated power rectified by the rectifier circuit 120₁ is made larger than the generated output rectified by each of the other rectifier circuits 110₂, ... 110ₙ, and most part of a required generated output is provided by the rectifier circuit 120₁. When the vibration frequency of the casing with the air conditioner compressor housed therein changes to a frequency close to e.g. the resonance frequency fr₂ of the electrostatic induction conversion device 110₂, the generated output from the electrostatic induction conversion device 110₁ lowers since the electrostatic induction conversion device 110₁ comes out of the resonance state. The required generated power is, however, provided by the rectifier circuit 120₂ since the electrostatic induction conversion device 110₂ is in turn brought into a resonance state to increase the generated output from the electrostatic induction conversion device 110₂.

In Fig. 6 is shown an example of the frequency characteristics of the generated output (generated power) from the vibration power generator 100. In Fig. 6, the waveform G represents the frequency characteristics of the generated power from the vibration power generator 100. The waveforms H₁, H₂, ... Hₙ represent the frequency characteristics of the generated power of the electrostatic induction conversion devices 110₁, 110₂, ... 110ₙ, which correspond to the waveforms shown in Figs. 3(a) and (b). The waveform G correspond to a waveform obtained by combining the waveforms H₁, H₂, ... Hn.

In this embodiment, the electrostatic induction conversion devices 110₁, 110₂, ... 110ₙ have the different special mechanical resonance frequencies fr₁, fr₂, ... frn from each other, and the respective electrostatic induction conversion devices 110₁, 110₂, ... 110ₙ increase the generated output when being vibrated at their special mechanical resonance frequencies fr₁, fr₂, ... frn, respectively. Thus, in accordance with this embodiment, even if the vibration frequency of the casing of the air conditioner compressor changes, it is possible to generate power over a wide range of vibration frequencies since any one of the electrostatic induction conversion devices 110₁, 110₂, ... 110ₙ increases the generated output at a frequency close to its corresponding mechanical resonance frequency fr₁, fr₂, ... or frn.

Further, in accordance with this embodiment, the respective electrostatic induction conversion devices output a high voltage of about 120 to about 200V since the resin film (A) described later is employed in the charge retention medium forming the electrets 115. Thus, the generated output from the electrostatic induction conversion devices can be utilized as power over a wide range of vibration frequencies including low frequencies even if each of the electrostatic induction conversion devices has a high output impedance and produces a minute output current.

Furthermore, it is possible to reduce the amount of the reverse current in the respective rectifier circuits constituting the combiner 120 to reduce a decrease in the generated power efficiency because the schottky-barrier diode 129 is disposed in each of the rectifier circuits.

Furthermore, in accordance with the present invention, it is possible to rectify both of a positive component and a negative component of the generated power from each of the electrostatic induction conversion devices 110₁, 1102, ... 110ₙ since the rectifier circuits 120₁, 120₂, ... 120ₙ are constituted by the full-wave rectifier circuits. Thus, it is possible to increase the generated power efficiency in comparison with e.g. a case where the rectifier circuits are constituted by half-wave rectifier circuits.

Furthermore, in accordance with this embodiment, since the outputs of the rectifier circuits 120₁, 120₂, ... 120ₙ are connected to one another in parallel, it is possible to superimpose the output currents from the respective rectifier circuits without increasing the output impedance of the vibration power generator 100.

It should be noted that the outputs of the rectifier circuits 120₁, 120₂, ... 120ₙ may be connected in series with one another in the first embodiment. This arrangement can provide a higher output voltage than the output voltage from each of the rectifier circuits because it is possible to superimpose the output voltages from the respective rectifier circuits.

In the first embodiment, the schottky-barrier diode 129 included in each of the rectifier circuits 120₁, 120₂, ... 120ₙ may be omitted so long as a required generated output can be obtained.

### (First modified embodiment)

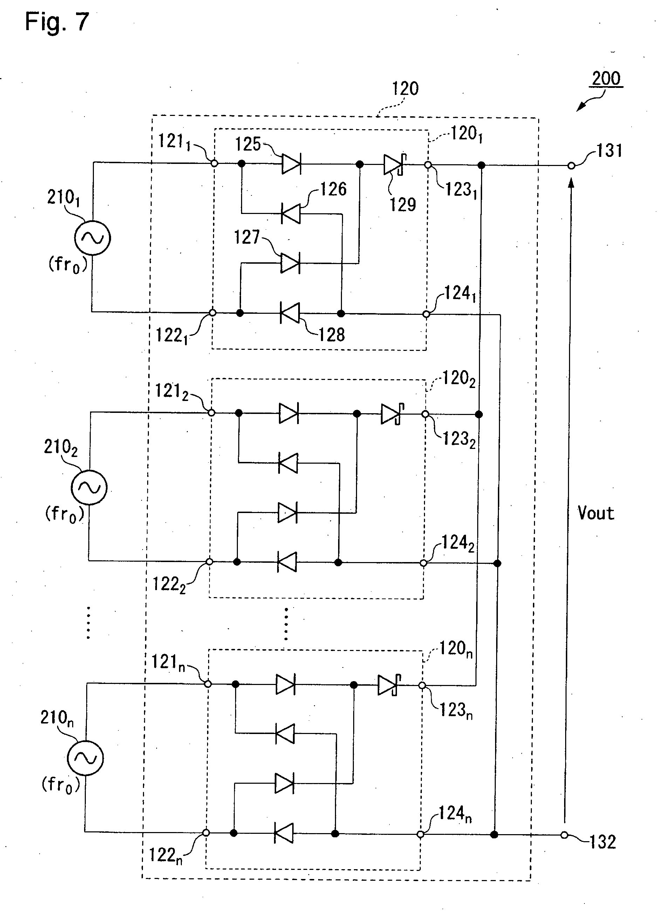

In Fig. 7 shown an example of the structure of the vibration power generator 200 according to a modification of the first embodiment.

The vibration power generator 200 includes a plurality of electrostatic induction conversion devices 210₁, 210₂,... 210ₙ having a common mechanical resonance frequency fr₀ one another, instead of the electrostatic induction conversion devices 110₁, 110₂, ... 110ₙ having different mechanical resonance frequencies in the structure of the vibration power generator 100 in Fig. 1. The other members are the same as those of the vibration power generator 100 shown in Fig. 1.

In this first modified embodiment, the total generated output of the electrostatic induction conversion devices 210₁, 210₂, ... 210ₙ increases at a frequency close to the mechanical resonance frequency fr₀. Thus, it is possible to obtain a larger generated output by rectifying the generated output from each of the electrostatic induction conversion devices 210₁, 210₂, ... 210ₙ and making combination. In particular, it is possible to obtain a large current as the output current from the vibration power generator 200 since the current components from the respective electrostatic induction conversion devices 210₁, 210₂, ... 210ₙ are superimposed in accordance with the first modified embodiment.

The electrostatic induction conversion devices 210₁, 210₂, ... 210ₙ having the common mechanical resonance frequency fr₀ to one another can be connected in parallel directly with one another to combine the respective generated outputs. The respective generated outputs from the plurality of electrostatic induction conversion devices are, however out of phase in a strict sense because of an individual difference among the electrostatic induction conversion devices caused by their production or a difference among the packaging forms of the electrostatic induction conversion devices. For this reason, when such electrostatic induction conversion devices are in parallel connected directly to one another, the generated outputs from the respective electrostatic induction conversion devices in an out-of-phase state interfere with one another to decrease the generated power efficiency. In contrast, in accordance with the first modified embodiment shown in Fig 7, the interference among the generated outputs from the electrostatic induction conversion devices is reduced since the provision of the combiner 120 reduce the amount of the reverse current in the generated outputs from the respective electrostatic induction conversion devices. Thus, it is possible to reduce a decrease in the generated power efficiency even if the respective generated outputs from the electrostatic induction conversion devices are out of phase.

### (Second modified embodiment)

In the structure of the vibration power generator 100 shown in Fig. 1, some of the electrostatic induction conversion devices 110₁, 110₂, ... 110ₙ may be replaced with plural electrostatic induction conversion devices having a common mechanical resonance frequency. In the structure of the vibration power generator 200 according to the first modified embodiment shown in Fig. 7, at least one of the electrostatic induction conversion devices 120₁, 120₂, ... 120ₙ may be replaced with an electrostatic induction conversion device having a mechanical resonance frequency different from the frequency fr₀. In those cases, the electrostatic induction conversion devices are configured by at least three electrostatic induction conversion devices (i.e. n is a natural number not less than 3 in these cases) such that there is a combination of electrostatic induction conversion devices having a common mechanical resonance frequency while there is another combination of electrostatic induction conversion devices having different mechanical resonance frequencies.

For example, in the structure shown in Fig. 1, when the vibration frequency of the casing with the air condition compressor housed therein stays at a frequency close to the mechanical resonance frequency fr₂ of the electrostatic induction conversion device 110₂ for a long time, the number of the electrostatic induction conversion devices 110₂ having the mechanical resonance frequency fr₂ may be increased. In this case, it is possible to effectively generate power in conforming to the operation condition of the air conditioner compressor.

### [Second embodiment]

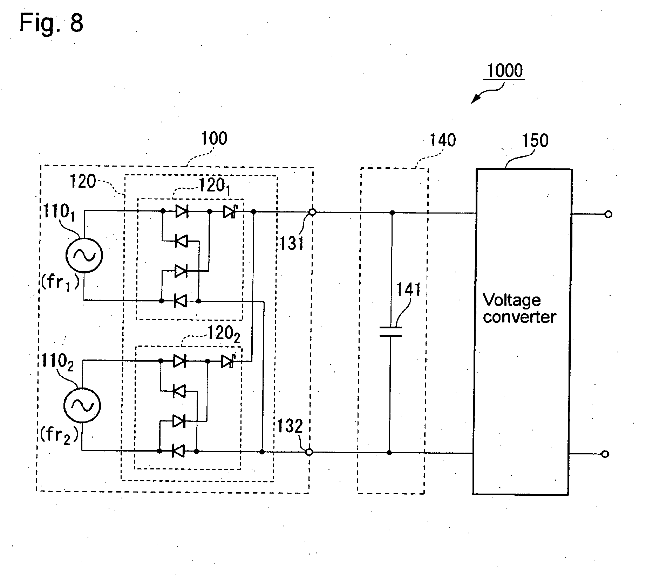

In Fig. 8 is shown an example of the structure of the power source module 1000 according to a second embodiment of the present invention. The power source module 1000 includes the vibration power generator 100 according to the first embodiment, a smoothing unit 140 for smoothing the generated output from the vibration power generator 100, and a voltage converter 150 for converting the generated output smoothed by the smoothing unit, into a desired voltage. The vibration power generator 100 shown in Fig. 8 corresponds to a case where "n" is 2 in the structure shown in Fig. 1, and the power generator includes two electrostatic induction conversion devices 110₁ and 110₂. It should be noted that the power source module is not limited to the shown structure, and there is no limitation to the number of the electrostatic induction conversion devices.

The smoothing unit 140 is constituted by a capacitor 141. The capacitor 141 has a first electrode terminal connected to the first output 131 of the vibration power generator 100 and a second electrode terminal connected to the second output 132 of the vibration power generator 132. The first and second electrode terminals of the capacitor 141 are connected to inputs of the voltage converter 150 so as to serve as outputs of the smoothing unit 140.

The voltage converter 150 is constituted by e.g. a voltage regulator circuit such that the voltage of the generated output smoothed by the smoothing unit 140 is converted into a desired voltage. The desired voltage means a voltage required for a load supplied with the output voltage from the power source module 1000, which may be set at an arbitrary value according to the load. The voltage regulator circuit constituting the voltage converter 150 may be in the form of any proper type of circuit, such as a three-terminal regulator or a switching regulator.

The generated output from the vibration power generator 100 varies according to the power generation states of the electrostatic induction conversion devices, and the voltage of the generated power is not constant. In this embodiment, the smoothing unit 140 smooths the generated output from the vibration power generator 100 and supplies the smoothed output to the voltage converter 150. The voltage of the generated output smoothed by the smoothing unit 140 is converted into a desired constant voltage by the voltage converter 150, which in turn outputs the desired constant voltage.

Thus, the power regulator 1000 can have not only the advantage offered by the first embodiment but also an advantage of producing a generated output having a desired voltage required for a load such that the load can be supplied with its required operation power.

### [Electret]

As a charge retention medium constituting each electret, an insulating material which has been commonly used for an electret, may be employed. The insulating material may be an organic insulating material or an inorganic insulating material.

The organic insulating material may, for example, be a fluorinated polymer (fluorinated resin) such as polytetrafluoroethylene (PTFE), a tetrafluoroethylene/perfluoroalkyl vinyl ether copolymer (PFA), a tetrafluoroethylene/hexafluoropropylene copolymer (FEP), a tetrafluoroethylene/ethylene copolymer (ETFE) or a fluorinated polymer (a) as described hereinafter; a hydrocarbon polymer such as polypropylene, polystyrene or a cycloolefin copolymer; a polycarbonate; or a material derived from such a polymer.

The material derived from such a polymer may, for example, be a mixture of the polymer with another component other than the polymer, or a reaction product of the polymer with another component other than the polymer.

The inorganic insulating material may, for example, be a silicon oxide film or a silicon nitride film, formed by thermal oxidation or plasma CVD.

The charge retention medium is preferably a resin film using a fluorinated polymer, since it has a high insulating property and a low water absorption rate. Or, it is preferably a resin film using a polymer having an alicyclic structure in the main chain or a material derived from such a polymer, since it is excellent in stability (both stability at ordinary temperature and stability when heated) of the surface potential value and charge retention. Particularly preferred is a resin film using a fluorinated polymer (a) having an alicyclic ring in the main chain or a derivative (a') of such a fluorinated polymer (a) (hereinafter sometimes referred to as a "resin film (A)").

By using the fluorinated polymer (a) or the derivative (a'), the resin film (A) has a high charge retention performance, and an electret obtained by injecting an electrical charge to the resin film (A) will have a high surface charge density.

### (Resin film (A))

The resin film (A) is formed by using a fluorinated polymer (a) having an alicyclic ring in the main chain or a derivative (a') of such a fluorinated polymer (a), i.e. it contains such a polymer or derivative as the main component.

Although described later in detail, the derivative (a') may, for example, be a mixture of the fluorinated polymer (a) with another component other than the fluorinated polymer (a), or a reaction product of the fluorinated polymer (a) with another component other than the fluorinated polymer (a). In a case where the resin film (A) contains the reaction product, part of the fluorinated polymer (a) or another component used for the formation of the reaction product may remain as unreacted in the resin film (A).

### <Fluorinated polymer (a)>

The fluorinated polymer (a) is a fluorinated polymer having an alicyclic ring in the main chain.

In the fluorinated polymer (a), fluorine atoms may be bonded to carbon atoms constituting the main chain or may be bonded to a side chain. Fluorine atoms are preferably bonded to at least carbon atoms constituting the main chain, such being suitable for obtaining an electret having a low water absorption rate/low dielectric constant, a high dielectric breakdown voltage and a high volume resistivity.

The expression "having an alicyclic ring in the main chain" means that at least one among carbon atoms constituting the ring structure of the alicyclic ring is a carbon atom constituting the main chain of the fluorinated polymer (a).

Usually, in a case where a polymer is one obtained by addition polymerization of a monomer having one polymerizable double bond, the two carbon atoms derived from the polymerizable double bond in the monomer used for the polymerization become carbon atoms constituting the main chain of the polymer. In a case where a polymer is one obtained by cyclopolymerization of a monomer having two polymerizable double bonds, the four carbon atoms derived from the two polymerizable double bonds in the monomer used for the polymerization become carbon atoms constituting the main chain of the polymer.

For example, in a case where the fluorinated polymer (a) is a fluorinated polymer obtained by polymerizing a cyclic monomer as described later, the two carbon atoms constituting the polymerizable double bond in the cyclic monomer become carbon atoms constituting the main chain. In such a case, depending upon the type of the monomer, one or two among the two carbon atoms constituting the main chain becomes carbon atom(s) constituting the ring structure of the alicyclic ring. Specifically, in the compound (1) as described later, the two carbon atoms derived from its polymerizable double bond become carbon atoms constituting the main chain of the polymer, and by the presence of the polymerizable double bond in the compound (1) between carbon atoms constituting the ring structure of the alicyclic ring, two carbon atoms in the polymer main chain derived from the carbon atoms constituting the polymerizable double bond in the compound (1) become carbon atoms constituting the ring structure of the alicyclic ring. In the compound (2) as described later, by the presence of the polymerizable double bond between a carbon atom constituting the ring structure and a carbon atom outside of the ring, one (a carbon atom on the side constituting the cyclic structure) out of two carbon atoms in the polymer main chain derived from the carbon atoms constituting the polymerizable double bond in the compound (2) likewise becomes a carbon atom constituting the ring structure of the alicyclic ring.

Further, in a case where the fluorinated polymer (a) is a fluorinated polymer obtained by cyclopolymerizing a diene monomer having two polymerizable double bonds, the four carbon atoms constituting the two polymerizable double bonds become carbon atoms constituting the main chain. In such a case, depending upon the difference of the bonds to be formed at the time of cyclopolymerization, two, three or four among the four carbon atoms constituting the main chain become carbon atoms constituting the ring structure of the alicyclic ring.

The "alicyclic ring" represents a ring having no aromaticity. The alicyclic ring may be saturated or unsaturated. The alicyclic ring may be one having a carbon ring structure wherein the ring structure is constituted solely by carbon atoms, or one having a heterocyclic structure wherein the ring structure contains an atom (a hetero atom) other than carbon atoms. As such a hetero atom, an oxygen atom or a nitrogen atom may, for example, be mentioned.

The number of atoms constituting the ring structure of an alicyclic ring is preferably from 4 to 7, particularly preferably from 5 or 6. That is, the alicyclic ring is preferably a 4- to 7-membered ring, particularly preferably a 5- or 6-membered ring.

The alicyclic ring may have a substituent or may not have a substituent. The expression "may have a substituent" means that a substituent (an atom other than a hydrogen atom, or a group) may be bonded to an atom constituting the ring structure of the alicyclic ring.

The alicyclic ring may be a non-fluorinated alicyclic ring or a fluorinated alicyclic ring.

The non-fluorinated alicyclic ring is an alicyclic ring containing no fluorine atom in the structure. Specifically, the non-fluorinated alicyclic ring may, for example, be a saturated or unsaturated aliphatic hydrocarbon ring, or an aliphatic hetero ring having part of carbon atoms in such an aliphatic hydrocarbon ring substituted by a hetero atom such as an oxygen atom or a nitrogen atom.

The fluorinated alicyclic ring is an alicyclic ring containing fluorine atoms in the structure. The fluorinated alicyclic ring may, for example, be an alicyclic ring having fluorine atoms or a substituent containing fluorine atoms (hereinafter referred to as a fluorinated group) bonded to carbon atoms constituting the ring structure of the alicyclic ring. As such a fluorinated group, a perfluoroalkyl group, a perfluoroalkoxy group or =CF₂ may, for example, be mentioned.

The fluorinated alicyclic ring and the non-fluorinated alicyclic ring may contain halogen atoms other than fluorine atoms, or a substituent other than the fluorinated group.

The alicyclic ring is preferably a fluorinated alicyclic ring from the viewpoint of its excellent charge retention performance.

Preferred as the fluorinated polymer (a) may be the following polymer (I) and polymer (II).

Polymer (I): a polymer having units formed by addition polymerization of a fluorinated cyclic monomer.

Polymer (II): a polymer having units formed by cyclopolymerization of a fluorinated diene monomer.

The "units" means repeating units constituting the polymer, derived from the monomer.

Hereinafter, a compound represented by the formula (1) will be referred to also as a "compound (1)". A unit, compound, etc. represented by other formulae will be referred to likewise, and for example, a unit represented by the formula (3-1) will be referred to also as a "unit (3-1)".

The polymer (I) has units formed by addition polymerization of a fluorinated cyclic monomer.

The "fluorinated cyclic monomer" is a monomer having a polymerizable double bond between carbon atoms constituting a fluorinated alicyclic ring, or a monomer having a polymerizable double bond between a carbon atom constituting the fluorinated alicyclic ring and a carbon atom outside of the fluorinated alicyclic ring. As the fluorinated cyclic monomer, preferred is a perfluoro cyclic monomer, i.e. a fluorinated cyclic monomer containing no hydrogen atoms bonded to carbon atoms.

As the fluorinated cyclic monomer, preferred is the following compound (1) or compound (2). 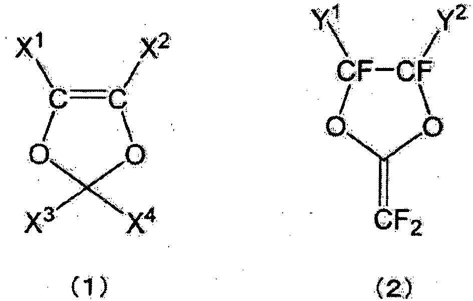 [In the formulae, each of X¹, X², X³, X⁴, Y¹ and Y² which are independent of one another, is a fluorine atom, a perfluoroalkyl group which may contain an etheric oxygen atom
(-O-), or a perfluoroalkoxy group which may contain an etheric oxygen atom; and X³ and X⁴ may be bonded to each other to form a ring.]

The perfluoroalkyl group for X¹, X², X³, X⁴, Y¹ and Y² has preferably from 1 to 7 carbon atoms, particularly preferably from 1 to 4 carbon atoms. Such a perfluoroalkyl group is preferably a straight chain form or a branched chain form, particularly preferably a straight chain form. Specifically, a trifluoromethyl group, a pentafluoroethyl group or a heptafluoropropyl group may, for example, be mentioned, and particularly preferred is a trifluoromethyl group.

The perfluoroalkoxy group for X¹, X², X³, X⁴, Y¹ and Y² may be one having an oxygen atom (-O-) bonded to the above perfluoroalkyl group, and particularly preferred is a trifluoromethoxy group.

In the formula (1), X¹ is preferably a fluorine atom.

X² is preferably a fluorine atom, a trifluoromethyl group or a C₁₋₄ perfluoroalkoxy group, particularly preferably a fluorine atom or a trifluoromethoxy group.

Each of X³ and X⁴ which are independent of each other, is preferably a fluorine atom or a C₁₋₄ perfluoroalkyl group, particularly preferably a fluorine atom or a trifluoromethyl group.

X³ and X⁴ may be bonded to each other to form a ring. In such a case, the ring structure of such a ring constituted by X³ and X⁴ and one carbon atom in the above ring, may contain a hetero atom, and such a ring may have a substituent such as a perfluoroalkyl group. The number of atoms constituting the ring structure of the ring containing X³ and X⁴ is preferably from 4 to 7, particularly preferably 5 or 6.

Compounds (1-1) to (1-5) may be mentioned as preferred specific examples of the compound (1).

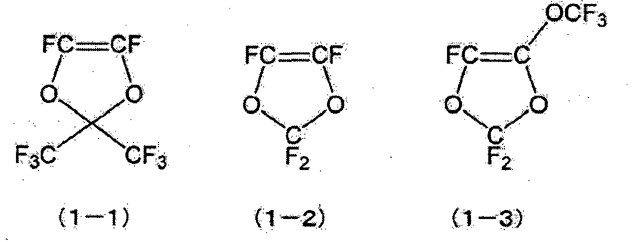

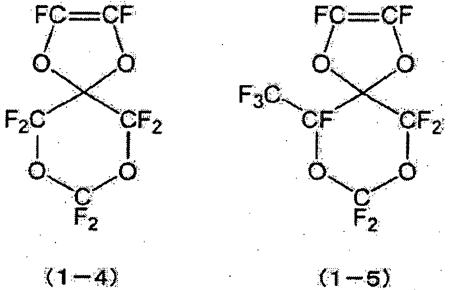

In the formula (2), each of Y¹ and Y² which are independent of each other, is preferably a fluorine atom, a C₁₋₄ perfluoroalkyl group or a C₁₋₄ perfluoroalkoxy group, particularly preferably a fluorine atom or a trifluoromethyl group.

Compounds (2-1) and (2-2) may be mentioned as preferred specific examples of the compound (2).

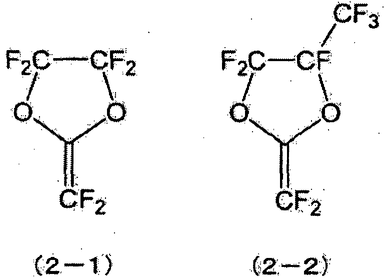

The polymer (I) may be constituted solely by units formed by the above-described fluorinated cyclic monomer, or may be a copolymer having such units and other units.

However, in the polymer (I), the proportion of units based on the fluorinated cyclic monomer is preferably at least 20 mol%, more preferably at least 40 mol%, or may be 100 mol%, to the total of all repeating units constituting the polymer (I).

Such another monomer is not particularly limited so long as it is one copolymerizable with the fluorinated cyclic monomer. Specifically, a fluorinated diene monomer, a monomer having a reactive functional group in a side chain, tetrafluoroethylene, chlorotrifluoroethylene or perfluoro(methyl vinyl ether) may, for example, be mentioned. The fluorinated diene monomer may be the same one as mentioned in the description of the polymer (II) which will be described later. The monomer having a reactive functional group in a side chain may be a monomer having a polymerizable double bond and a reactive functional group. The polymerizable double bond may, for example, be CF₂=CF-, CF₂=CH-, CH₂=CF-, CFH=CF-, CFH=CH-, CF₂=C- or CF=CF-. The reactive functional group may, for example, be the same one as mentioned in the description of the polymer (II) which will be described later.

Here, a polymer obtainable by copolymerization of a fluorinated cyclic monomer and a fluorinated diene monomer is regarded as a polymer (I).

The polymer (II) has units formed by cyclopolymerization of a fluorinated diene monomer.

The "fluorinated diene monomer" is a monomer having two polymerizable double bonds and fluorine atoms. The polymerizable double bonds are not particularly limited, but they are preferably vinyl groups, allyl groups, acryloyl groups or methacryloyl groups. The fluorinated diene monomer is preferably a perfluorodiene monomer i.e. a fluorinated diene monomer containing no hydrogen atoms bonded to carbon atoms.

The following compound (3) is preferred as the fluorinated diene monomer.

CF₂=CF-Q-CF=CF₂ (3)

In the formula (3), Q is a C₁₋₅, preferably C₁₋₃. perfluoroalkylene group which may have an etheric oxygen atom and may have a branch, and wherein part of fluorine atoms may be substituted by a halogen atom other than a fluorine atom. The halogen atom other than a fluorine atom may, for example, be a chlorine atom or a bromine atom.

Q is preferably a perfluoroalkylene group containing an etheric oxygen atom. In such as case, the etheric oxygen atom in the perfluoroalkylene group may be present at one terminal of the group, may be present at both terminals of the group, or may be present between carbon atoms in the group. From the viewpoint of the cyclopolymerizability, it is preferably present at one terminal of the group.

The following compounds may be mentioned as specific examples of the compound (3).

CF₂=CFOCF₂CF=CF₂,

CF₂=CFOCF(CF₃)CF=CF₂,

CF₂=CFOCF₂CF₂CF=CF₂,

CF₂=CFOCF₂CF(CF₃)CF=CF₂,

CF₂=CFOCF(CF₃)CF₂CF=CF₂,

CF₂=CFOCFCICF₂CF=CF₂,

CF₂=CFOCCI₂CF₂CF=CF₂,

CF₂=CFOCF₂OCF=CF₂,

CF₂=CFOC(CF₃)₂OCF=CF₂,

CF₂=CFOCF₂CF(OCF₃)CF=CF₂,

CF₂=CFCF₂CF=CF₂,

CF₂=CFCF₂CF₂CF=CF₂,

CF₂=CFCF₂OCF₂CF=CF₂.

The following units (3-1) to (3-4) may be mentioned as units to be formed by cyclopolymerization of the compound (3). The rings in the following units are preferably 5-membered or 6-membered rings. In the polymer (II), there may be a case where only one type of such units are present, or a case where two or more types of such units are present.

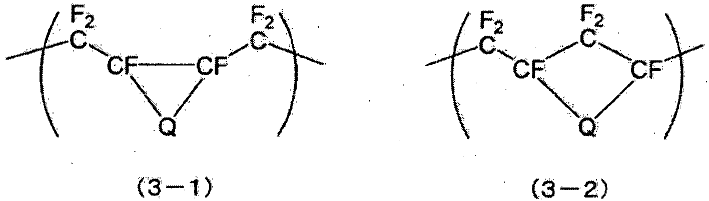

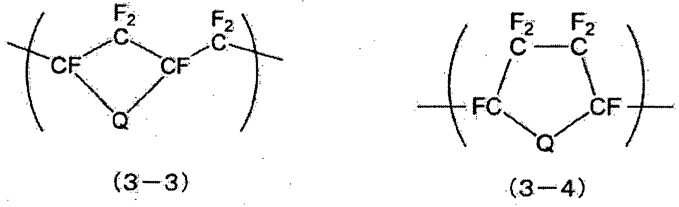

The fluorinated polymer (a) preferably has a reactive functional group.

The "reactive functional group" means a group having a reactivity whereby it is capable of reacting between molecules of the fluorinated polymer (a) or with another component blended with the fluorinated polymer (a), to form a bond.

For example, in a case where as such another component, the after-described silane coupling agent or a compound having two or more polar functional groups and having a molecular weight of from 50 to 2,000 (excluding a silane coupling agent) (hereinafter referred to as a polyvalent polar compound) is blended, followed by a reaction to obtain a reaction product, the fluorinated polymer (a) preferably has a reactive functional group capable of reacting with a functional group of the coupling agent or with a polar functional group of the polyvalent polar compound.

In consideration of efficiency for introduction into the polymer, the intensity of interaction with the silane coupling agent or the polyvalent polar compound, etc., the reactive functional group of the fluorinated polymer (a) is preferably at least one member selected from the group consisting of a carboxy group, an acid halide group, an alkoxycarbonyl group, a carbonyloxy group, a carbonate group, a sulfo group, a phosphono group, a hydroxy group, a thiol group, a silanol group and an alkoxysilyl group, particularly preferably a carboxy group or an alkoxycarbonyl group.

The reactive functional group may be bonded to a terminal of the main chain of the fluorinated polymer (a) or to a side chain. From the viewpoint of efficiency in the production, it is preferably bonded to a terminal of the main chain. Namely, the most preferred mode as the fluorinated polymer (a) is such that it has a carboxy group or an alkoxycarbonyl group at a terminal of the main chain.

Here, a polymer obtained by polymerizing the fluorinated cyclic monomer or the fluorinated diene monomer in the presence of an initiator such as a radical generating agent, is likely, in many cases, to have an unstable terminal group such as a fluorocarbonyl group (-C(O)-F) at a terminal of the main chain. Therefore, frequently, such an unstable group is converted to an inert group or a stable functional group. By such conversion of the terminal group, it is possible to obtain a polymer having the above-mentioned reactive functional group such as a carboxy group or an alkoxycarbonyl group at a terminal of the main chain.

The relative dielectric constant of the fluorinated polymer (a) is preferably from 1.8 to 8, more preferably from 1.8 to 5, further preferably from 1.8 to 3, particularly preferably from 1.8 to 2.7, most preferably from 1.8 to 2.3. When the relative dielectric constant is at least the lower limit value in the above range, the quantity of electric charge which can be stored as an electret, is high, and when it is at most the upper limit value, the electrical insulating properties and the charge retention stability as an electret are excellent. The relative dielectric constant may be measured in accordance with ASTM D150 at a frequency of 1 MHz.

Further, the resin film (A) is a portion to play a role for charge retention as an electret, and therefore, the fluorinated polymer (a) is preferably one having a high volume resistivity and high dielectric breakdown strength.

The volume resistivity of the fluorinated polymer (a) is preferably from 10¹⁰ to 10²⁰ Ωcm, particularly preferably from 10¹⁶ to 10¹⁹ Ωcm. The volume resistivity may be measured by ASTM D257.

The dielectric breakdown strength of the fluorinated polymer (a) is preferably from 10 to 25 kV/mm, particularly preferably from 15 to 22 kV/mm. The dielectric breakdown strength may be measured by ASTM D149.

The refractive index of the fluorinated polymer (a) is preferably from 1.2 to 2, particularly preferably from 1.2 to 1.5, with a view to reducing the difference in refractive index from the substrate and preventing interference of light by e.g. birefringence thereby to secure transparency.

The weight average molecular weight (Mw) of the fluorinated polymer (a) is preferably at least 50,000, more preferably at least 150,000, further preferably at least 200,000, particularly preferably at least 250,000. When Mw is at least 50,000, film deposition is easy. Particularly when it is at least 200,000, the heat resistance of the film is improved, whereby when the film is made into an electret, the thermal stability of the retained electric charge will be improved. On the other hand, if the weight average molecular weight (Mw) is too high, the solubility in a solvent tends to be low thus leading to such a problem that the film deposition process is thereby restricted. Accordingly, the weight average molecular weight (Mw) of the fluorinated polymer (a) is preferably at most 1,000,000, more preferably at most 850,000, further preferably at most 650,000, particularly preferably at most 550,000.

In this specification, the weight average molecular weight (Mw) of the fluorinated polymer (a) is a value calculated by a relational expression of Mw and the intrinsic viscosity [η] ([η] = 1.7 × 10⁻⁴ × Mw^{0.60}) as disclosed in Journal of Chemical Society of Japan, 2001, No. 12, p. 661.

The intrinsic viscosity [η] (30°C) (unit: dl/g) is a value measured by an Ubbelohde viscometer at 30°C using perfluoro(2-butyltetrahydrofuran) as a solvent.

As the fluorinated polymer (a), one synthesized by polymerizing the above-described monomer, may be used, or a commercial product may be used.

CYTOP (registered trademark, manufactured by Asahi Glass Company, Limited) may be mentioned as a commercial product of a fluorinated polymer which has a fluorinated alicyclic ring containing an etheric oxygen atom in the main chain and which has a carboxy group or an alkoxycarbonyl group at a terminal of the main chain.

### <Derivative (a')>

As mentioned above, the derivative (a') may, for example, be a mixture of a fluorinated polymer (a) with another component other than the fluorinated polymer (a), or a reaction product of a fluorinated polymer (a) with another component other than the fluorinated polymer (a).

As is different from the reaction product, the above mixture is in such a state that the fluorinated polymer (a) and another component other than the fluorinated polymer (a) are mixed without being reacted.

The above reaction product may, for example, be one which is formed by a reaction of the respective components when e.g. a coating liquid having the fluorinated polymer (a) and another component dissolved in a solvent, is heated (e.g. baked at the time of forming a film by vaporizing the solvent). Here, when the fluorinated polymer (a) and another component other than the fluorinated polymer (a) are reacted, the fluorinated polymer (a) and another component other than the fluorinated polymer (a) remaining without being reacted, are regarded as a mixture.

Such another component to be mixed or reacted with the fluorinated polymer (a) is preferably a silane coupling agent or a polyvalent polar compound, particularly preferably a silane coupling agent. It is possible to improve the charge retention performance (the thermal stability, stability with time, etc. of the retained electric charge) of the resin film (A) to be thereby formed. The effect to improve the charge retention performance is particularly remarkable in a case where the fluorinated polymer (a) has a carboxy group or an alkoxycarbonyl group at a terminal of the main chain.

The effect to improve the charge retention performance is considered to be such that the fluorinated polymer (a) and the silane coupling agent or the polyvalent polar compound will cause nano-phase separation to form a nano-cluster structure derived from the silane coupling agent or the polyvalent polar compound, and the nano-cluster structure functions as a site to store an electric charge in an electret.

In the derivative (a'), the silane coupling agent or the polyvalent polar compound may be present in such a state that its molecules are reacted to one another.

The silane coupling agent is not particularly limited, and a wide range of silane coupling agents including known and well known ones may be used.

As the silane coupling agent, a silane coupling agent having an amino group is preferred.

In consideration of efficient availability, a particularly preferred silane coupling agent is at least one member selected from the group consisting of 3-aminopropyl methyldiethoxysilane, 3-aminopropyl methyldimethoxysilane, 3-aminopropyl trimethoxysilane, 3-aminopropyl triethoxysilane, N-(2-aminoethyl)-3-aminopropyl trimethoxysilane, N-(2-aminoethyl)-3-aminopropyl methyldimethoxysilane and N-(2-aminoethyl)-3-aminopropyl triethoxysilane.

As the silane coupling agent, one type may be used alone, or two or more types may be used in combination.

The blend amount of the silane coupling agent is preferably from 0.1 to 20 mass%, more preferably from 0.3 to 10 mass%, particularly preferably from 0.5 to 5 mass%, to the total amount of the fluorinated polymer (a) and the silane coupling agent. Within the above range, it can easily be made into a uniform solution when it is dissolved together with the fluorinated polymer (a) in a solvent to prepare a coating liquid.

The polyvalent polar compound is preferably a compound having two or more polar functional groups and a molecular weight of from 50 to 2,000 (excluding the above silane coupling agent), particularly preferably a compound having a molecular weight of from 100 to 2,000 (excluding the above silane compound). When the molecular weight of the polyvalent polar compound is at least the lower limit value in the above range, the molecular weight is high, whereby the compound is hardly volatilized and it becomes easy to let it remain in the film after the film formation. Further, when the molecular weight is at most the upper limit value in the above range, the compatibility with the fluorinated polymer (a) will be good.

The "polar functional group" is a functional group having one or both of the following characteristics (1a) and (1b).
(1 a) containing at least two types of atoms different in electronegativity and having polarity due to polarization in the functional group.
(1 b) to let polarization form due to a difference in electronegativity between the functional group and carbon bonded thereto.

As a specific example of the polar functional group having only the above characteristic (1a), a hydroxyphenyl group may, for example, be mentioned.

As a specific example of the polar functional group having only the above characteristic (1b), a primary amino group (-NH₂), a secondary amino group (-NH-), a hydroxy group or a thiol group, may, for example, be mentioned.

As a specific example of the polar functional group having both of the above characteristics (1 a) and (1 b), a sulfo group, a phosphono group, a carboxy group, an alkoxycarbonyl group, an acid halide group, a formyl group, an isocyanate group, a cyano group, a carbonyloxy group (-C(O)-O-) or a carbonate group (-O-C(O)-O-) may, for example, be mentioned.

The polyvalent polar compound is preferably at least one member selected from the group consisting of pentane-1,5-diamine, hexane-1,6-diamine, cyclohexane-1,2-diamine, cyclohexane-1,3-diamine, cyclohexane-1,4-diamine, 1,2-diaminobenzene, 1,3-diaminobenzene, 1,4-diaminobenzene, tris(2-aminoethyl)amine, tris(3-aminopropyl)amine, cyclohexane-1,3,5-triamine, cyclohexane-1,2,4-triamine, 1,3,5-triaminobenzene, 1,2,4-triaminobenzene, 2,4,6-triaminotoluene, 1,3,5-tris(2-aminoethyl)benzene, 1,2,4-tris(2-aminoethyl)benzene, 2,4,6-tris(2-aminoethyl)toluene, diethylenetriamine, triethylenetetramine, tetraethylenepentamine and polyethyleneimine, particularly preferably at least one member selected from the group consisting of tris(2-aminoethyl)amine, tris(3-aminopropyl)amine, cyclohexane-1,3-diamine, hexane-1,6-diamine, diethylenetriamine and polyethyleneimine.

As the polyvalent polar compound, one type may be used alone, or two or more types may be used in combination. For example, a compound having two polar functional groups and a compound having three or more polar functional groups may be used as mixed.

The blend amount of the polyvalent polar compound is preferably from 0.01 to 30 mass%, particularly preferably from 0.05 to 10 mass%, to the blend amount of the fluorinated polymer (a). When the blend amount is at least the lower limit value in the above range, the effect by incorporation of the polyvalent polar compound is sufficiently obtainable. When the blend amount is at most the upper limit value in the above range, the miscibility with the fluorinated polymer (a) is good, and the distribution in the coating liquid will be uniform.

### (Method for forming resin film (A))

The method for forming the resin film (A) is not particularly limited, and a known method may be employed. For example, a method may be mentioned wherein a coating film is formed on the fixed electrode 113 side surface of a fixed substrate 111 on which the fixed electrode 113 is formed, and the coating film is subjected to patterning to have a pattern corresponding to the fixed electrode 113.

The method for forming the coating film may, for example, be a method for forming a coating film by using a coating liquid having the fluorinated polymer (a) dissolved in a solvent, or a coating liquid having the fluorinated polymer (a) and another component other than the fluorinated polymer (a) dissolved in a solvent. As mentioned above, as such another component, a silane coupling agent or a polyvalent polar compound is preferred, and particularly preferred is a silane coupling agent.

As the solvent, a solvent capable of dissolving at least the fluorinated polymer (a) is used. In a case where another component is contained, if the solvent capable of dissolving the fluorinated polymer (a) is able to dissolve such another component, it is possible to obtain a uniform solution by using the solvent alone. Otherwise, another solvent capable of dissolving such another component may be used in combination.

Specifically, as the solvent, a protic solvent or an aprotic solvent may, for example, be mentioned. Among them, one capable of dissolving components to be incorporated to the coating liquid may optionally be selected for use.

The "protic solvent" is a solvent having a proton-donating property. The "aprotic solvent" is a solvent having no proton-donating property.

The protic solvent may, for example, be the following protic non-fluorinated solvent or protic fluorinated solvent.

A protic non-fluorinated solvent such as methanol, ethanol, 1-propanol, isopropyl alcohol, 1-butanol, 2-butanol, t-butanol, pentanol, hexanol, 1-octanol, 2-octanol, ethylene glycol, ethylene glycol monomethyl ether, propylene glycol monomethyl ether, propylene glycol monobutyl ether, propylene glycol or methyl lactate.

A protic fluorinated solvent, such as a fluorinated alcohol such as 2-(perfluorooctyl)ethanol, a fluorinated carboxylic acid, an amide of a fluorinated carboxylic acid, or a fluorinated sulfonic acid.

The aprotic solvent may, for example, be the following aprotic non-fluorinated solvent or aprotic fluorinated solvent.

An aprotic non-fluorinated solvent, such as hexane, cyclohexane, heptane, octane, decane, dodecane, decalin, acetone, cyclohexanone, 2-butanone, dimethoxyethane, monomethyl ether, ethyl acetate, butyl acetate, diglyme, triglyme, propylene glycol monomethyl ether monoacetate (PGMEA), N,N-dimethylformamide (DMF), N,N-dimethylacetamide (DMA), N-methylpyrrolidone, tetrahydrofuran, anisole, dichloromethane, dichloroethane, chloroform, carbon tetrachloride, chlorobenzene, dichlorobenzene, benzene, toluene, xylene, ethylbenzene, mesitylene, tetraline or methylnaphthalene.

An aprotic fluorinated solvent, such as a polyfluoroaromatic compound such as 1,4-bis(trifluoromethyl)benzene, a polyfluorotrialkylamine compound such as perfluorotributylamine, a polyfluorocycloalkane compound such as perfluorodecaline, a polyfluorocyclic ether compound such as perfluoro(2-butyltetrahydrofuran), a perfluoro polyether, a polyfluoroalkane compound or a hydrofluoroether (HFE).

One of these solvents may be used alone, or two or more of them may be used in combination. Further, a wide range of compounds other than these may also be used.

Among them, as a solvent to be used for dissolving the fluorinated polymer (a), an aprotic fluorinated solvent is preferred, since it is a good solvent wherein the solubility of the fluorinated polymer (a) is high.

As a solvent to be used for dissolving the silane coupling agent or the polyvalent polar compound, a protic fluorinated solvent is preferred.

The boiling point of such a solvent is preferably from 65 to 220°C, particularly preferably from 100 to 220°C, since it is thereby easy to form a uniform film at the time of coating.

The solvent to be used for the preparation of the coating liquid, preferably has a low water content. The water content is preferably at most 100 mass ppm, particularly preferably at most 20 mass ppm.

The concentration of the fluorinated polymer (a) in the coating liquid is preferably from 0.1 to 30 mass%, particularly preferably from 0.5 to 20 mass%.

The solid content concentration in the coating liquid may suitably set depending upon the film thickness to be formed. Usually, it is from 0.1 to 30 mass%, preferably from 0.5 to 20 mass%.

Here, the solid content is calculated in such a manner that the coating liquid, of which the mass has been measured, is hated under atmospheric pressure at 200°C for one hour to distil off the solvent, whereupon the mass of the remaining solid content is measured.

The coating liquid may be obtained by preliminarily preparing a composition containing the respective components and dissolving the composition in a solvent, or may be obtained by dissolving the respective components separately in solvents and mixing the obtained respective solutions.

In the case of preliminarily preparing a composition containing the respective components, the method for producing the composition may be such that solid and solid, or solid and liquid, may be mixed by kneading or co-extrusion, or that the respective solutions having the respective components dissolved in solvents may be mixed. Particularly preferred is to mix the respective solutions.

In a case where the fluorinated polymer (a) and the silane coupling agent are to be used in combination, the coating liquid is preferably obtained by separately preparing a polymer solution having the fluorinated polymer (a) dissolved in an aprotic fluorinated solvent and a silane coupling agent solution having the silane coupling agent dissolved in a protic solvent, and mixing the polymer solution and the silane coupling solution.

Film formation of the coating film may be carried out, for example, by applying a coating liquid on the surface of a substrate, followed by baking, etc.

The coating method is not particularly limited, and a conventional method for forming a film from a solution may be employed. Specific examples of such a method may be a spin coating method, a roll coating method, a casting method, a dipping method, a casting-on-water method, a Langmuir-Blodgett method, a die coating method, an ink jet method, a spray coating method, etc. Further, a printing technique such as a relief printing method, a gravure printing method, planography, a screen printing method or a flexographic printing method, may also be used.

The drying may be carried out by air drying at ordinary temperature, but is preferably carried out by heating for baking. The baking temperature is preferably at least the boiling point of the solvent, and it is particularly preferred to carry out the baking at a high temperature of at least 230°C in order to sufficiently complete the reaction between the fluorinated polymer (a) and the added silane coupling agent or polyvalent polar compound.

When the resin film (A) is formed by using the fluorinated polymer (a) or the derivative (a') described above, the surface of a substrate on which the resin (A) is to be formed is preferably made of chromium, aluminum, copper or the like in order to ensure required bondability. If the surface of a substrate on which the resin (A) is to be formed is preferably formed by gold, platinum or pure nickel, the resin film (A) cannot be bonded to the substrate. From this point of view, when the resin film (A) is formed on a vibrating plate 23, the surface of the vibrating plate 23 is preferably made of a conductive material, except for gold, platinum or pure nickel, among the materials listed as the material for forming the electrode film. From this point of view, if the vibrating plate 23 is mainly made of gold, platinum or pure nickel, it is preferred that the surface of the vibrating plate made of gold, platinum or pure nickel be provided with a film made of chromium, aluminum or the like.

The method for patterning the coating film is not particularly limited and may make use of a known patterning technique.

As a specific example, a method for forming a mask having a certain pattern on the above-mentioned coating film and etching the coating film is mentioned.

The mask may be formed by e.g. the same method as the fixed electrodes 113. It is sufficient that the material forming the mask has some degree of etching selectivity against the coating film and that the material is not necessarily conductive. For example, a resist film patterned so as to correspond to the fixed electrodes 113 may be employed as the mask. Patterning the resist film may be performed by a known lithography method.

### (Injection of electric charges)

Electric charges may be injected into the resin film (A) to form the resin film (A) as the electrets 115.

As the method for injecting electric charges to the coating film, it is usually possible to employ any method so long as it is a method to electrify an insulator. For example, it is possible to use a corona discharge method, an electron beam bombardment method, an ion beam bombardment method, a radiation method, a light irradiation method, a contact charging method, a liquid contact charging method and so on, as disclosed in G. M. Sessler, Electrets Third Edition, pp. 20, Chapter 2.2, "Charging and Polarizing Methods" (Laplacian Press, 1998). Especially, in the present invention, it is preferred to employ a corona discharge method or an electron beam bombardment method.

As a temperature condition at the time of injecting electric charges, it is preferred from the viewpoint of the stability of electric charges maintained after injection, that the injection be carried out at a temperature of at least the glass transition temperature (Tg) of the fluorinated polymer (a) or the derivative (a'), and it is particularly preferred that the injection be carried out under a temperature condition having a temperature of from about (Tg+10°C) to about (Tg+20°C).

The voltage to be applied at the time of injecting electric charges is preferably high so long as it is lower than the dielectric breakdown voltage of the resin film (A). In the present invention, the voltage applied to the resin film (A) is from 6 to 30 kV, preferably from 8 to 15 kV for positive charges and from -6 to -30 kV, preferably from -8 to -15 kV for negative charges.

The applied voltage is preferred to have negative charges because the fluorinated polymer (a) or the derivative (a') can maintain negative charges more stable than positive charges. In this case, the electrets 115 have a surface electrified with a negative potential.

Although explanation has been made about a case where the resin film (A) is formed directly on each of the fixed electrodes 113 on the fixed substrate 111 with the fixed electrodes 113 disposed thereon and where electric charges are injected into the resin film, the method for producing the electrets 115 is not limited to this case. For example, the production method may be carried out such that each resin film (A) is formed on a substrate, each of the formed resin film is removed from the substrate, and each of the removed resin film is disposed on the fixed substrate 111 with the fixed electrodes 113 formed thereon, followed by injecting electric charges into each of the disposed resin film so as to make the electrets 115. Or the production method may be carried out such that each resin film (A) is formed on a substrate, and electric charges are injected into each of the formed resin film so as to make the electrets 115, followed by removing the electrets 115 from the substrate and disposing the removed electrets on the fixed substrate 111 with the fixed electrodes 113 thereon.

When the resin film (A) is formed on a different substrate from the fixed substrate 111 without being followed by injecting electric charges in the resin film on the different substrate, the different substrate may be made of any material.

When the resin film (A) is formed on a different substrate from the fixed substrate 111, followed by injecting electric charges in the resin film on the different substrate, the different substrate is a substrate which is capable of being grounded when electric charges are injected into the formed laminate. The preferred material for the different substrate may be conductive metal, such as gold, silver, copper, nickel, chromium, aluminum, titanium, tungsten, molybdenum, tin, cobalt, palladium, platinum, or an alloy containing at least one of them as the main component. Even when the different substrate is not made of conductive metal, in other words, is a substrate made of an insulating material, e.g. an organic material such as glass, or an organic material such as polyethylene terephthalate, polyimide, polycarbonate or an acrylic resin (insulating substrate), such a substrate may be employed so long as the substrate has a surface coated with e.g. a metal film, a metal oxide, such as ITO (Indium Tin Oxide), IZO (Indium Zinc Oxide), zinc oxide, titanium dioxide or tin oxide, or an organic conductive material made of polyaniline, polypyrrole, PEDOT/PSS, or carbon nanotube, by e.g. sputtering, vapor deposition or wet-coating. The different substrate may be made of a semiconducting material, such as silicon, subjected to similar surface treatment, or a semiconducting material per se having a low resistance. The substrate material has a resistance value of preferably at most 0.1 Ωcm, particularly at most 0.01 Ωcm in specific volume resistance value. So long as the employed substrate is made of a material having such a low resistance value, it is possible to produce the electrets by injecting electric charges, without additional treatment, into a laminate formed on the substrate.

### INDUSTRIAL APPLICABILITY

The vibration power generator according to the present invention can convert kinematic energy into electric energy to generate power in a wide range of vibration frequencies. Accordingly, the vibration power generator according to the present invention is applicable to a power supply for a monitoring system for use in, e.g. social infrastructure (a freeway, a railroad (track), a bridge, a building energy managing system), transportation equipment (various vehicles such as an automobile or a railroad vehicle, an airplane, a ship, a bicycle so on), living space (domestic appliance, health-care equipment, portable equipment (such as a cell phone or a watch), a shaver, an air conditioner, a domestic energy managing system and so on), a factory (an electric motor, a robot, a belt conveyor, a compressor) and so on, or a power supply for a sensor for use in a place where it is difficult to perform maintenance work.

The entire disclosure of Japanese Patent Application No. 2012-243770 filed on November 5, 2012 including specification, claims, drawings and summary is incorporated herein by reference in its entirety.

### REFERENCE SYMBOLS

100: vibration power generator, 110, 110₁ to 110ₙ: electrostatic induction conversion device, 111: fixed substrate, 112: movable substrate, 113: fixed electrode, 114: movable electrode, 115: electret, 120: power combiner, 120₁ to 120ₙ: rectifier circuit, 125 to 128: diode, 129: schottky-barrier diode, 131: first output terminal, 132: second output terminal, 140: smoothing unit, 141: capacitor, 150: voltage converter, 210₁ to 210ₙ: electrostatic induction conversion device, 1000: power source module

## Claims

1. A vibration power generator comprising:
a plurality of electrostatic induction generation devices; and
a power combiner, the power combiner combining a generated output from each of the electrostatic induction generation devices.

2. The vibration power generator according to Claim 1, wherein the electrostatic induction generation devices comprise a plurality of electrostatic induction generation devices having different resonance frequencies from one another.

3. The vibration power generator according to Claim 1, wherein the electrostatic induction generation devices comprise a plurality of electrostatic induction generation devices having the same resonance frequency as one another.

4. The vibration power generator according to Claim 1, wherein the electrostatic induction generation devices comprise at least three electrostatic induction generation devices configured such that there is a combination of electrostatic induction generation devices having a common resonance frequency while there is another combination of electrostatic induction generation devices having different resonance frequencies.

5. The vibration power generator according to any one of Claims 1 to 4, wherein each of the electrostatic induction generation devices comprises:
a fixed electrode;
a movable electrode disposed opposite to the fixed electrode so as to be movable relatively with respect to the fixed electrode; and
an electret disposed on a side of the movable electrode opposite to the fixed electrode or a side of the fixed electrode opposite to the movable electrode.

6. The vibration power generator according to any one of Claims 1 to 5, wherein the power combiner comprises a plurality of rectifier circuits, the rectifier circuits rectifying the generated outputs from the electrostatic induction generation devices, and the rectifier circuits having outputs connected to each other in parallel.

7. The vibration power generator according to Claim 6, wherein each of the rectifier circuits further comprises a schottky-barrier diode such that output current from the rectifier circuit is suppressed from flow reversely.

8. The vibration power generator according to Claim 6 or 7, wherein each of the rectifier circuits is a full-wave rectifier circuit.

9. The vibration power generator according to any one of Claims 5 to 8, wherein the electret has a resin film made of a fluorinated polymer, the resin film having electric charges injected thereinto.

10. The vibration power generator according to Claim 9, wherein the fluorinated polymer comprises a fluorinated polymer containing an alicyclic ring in the main chain (a) or a derivative thereof (a').

11. The vibration power generator according to Claim 10, wherein the fluorinated polymer (a) further comprises a reactive functional group.

12. The vibration power generator according to Claim 10, wherein the derivative (a') of the fluorinated polymer (a) further comprises a mixture of the fluorinated polymer (a) containing a reactive functional group, and a silane coupling agent containing an amino group, or comprises a reaction product therebetween.

13. A power source module comprising:
a vibration power generator according to any one of Claims 1 to 12;
a smoothing unit, the smoothing unit smoothing the generated output from the vibration power generator; and
a voltage converter, the voltage converter converting the generated output smoothed by the smoothing unit into a desired voltage.
